# EUROPEAN PATENT APPLICATION

(11) **EP 4 683 272 A1**
(43) Date of publication of application: **21.01.2026**
(21) Application number: 23928464.9
(22) Date of filing: 26.12.2023
(51) Int. Cl.: H04L 9/40, G06F 21/34, G06F 21/41

(54) **LOGIN PROCESS TRIGGERING METHOD AND APPARATUS, DEVICE, AND MEDIUM**

(30) Priority: 17.03.2023 CN 202310286596
(71) Applicant: Alipay (Hangzhou) Information Technology Co., Ltd., Hangzhou, Zhejiang 310000 (CN)
(72) Inventor: YANG, Shaopiao, Hangzhou, Zhejiang 310000 (CN); KANG, Zubin, Hangzhou, Zhejiang 310000 (CN); YANG, Li, Hangzhou, Zhejiang 310000 (CN); QIN, Huayun, Hangzhou, Zhejiang 310000 (CN)
(74) Representative: Winter, Brandl - Partnerschaft mbB
(86) International application number: PCT/CN2023/141826
(87) International publication number: WO 2024/193160

(57) **Abstract**

Embodiments of this specification disclose a login procedure triggering method, apparatus, and device, and a medium. The solution includes: obtaining a login request that is sent by a first device and that is used to log in to a target application, where the login request includes a first login credential and a first device identifier of the first device; determining a second login credential corresponding to the first device identifier, where the second login credential is a credential that is generated after the first device establishes a trust relationship with a user account of the target application and that is used by the first device to log in to the user account; determining whether the first login credential is consistent with the second login credential, to obtain a first determining result; and if the first determining result indicates that the first login credential is consistent with the second login credential, triggering a procedure of logging in to the target application on the first device by using the user account.

## Description

### TECHNICAL FIELD

This application relates to the field of computer technologies, and in particular, to a login procedure triggering method, apparatus, and device, and a medium.

### BACKGROUND

With development of computer technologies and a requirement of people's life, a user may have a plurality of terminal devices, and may need to switch the same account of a login user on different terminal devices. For a user who needs to frequently switch a login account on a plurality of devices commonly used by the user, the user needs to perform login verification each time, for example, log in by entering a password, verifying an SMS message, etc. In this way, operating costs and time consumption are relatively high.

Therefore, a more convenient account login method needs to be provided.

### SUMMARY

Embodiments of this specification provide a login procedure triggering method, apparatus, and device, and a medium, to resolve a problem that operation costs and time consumption are relatively high in an existing login method.

To resolve the above-mentioned technical problem, the embodiments of this specification are implemented as follows:
An embodiment of this specification provides a login procedure triggering method, including: obtaining a login request that is sent by a first device and that is used to log in to a target application, where the login request includes a first login credential and a first device identifier of the first device; determining a second login credential corresponding to the first device identifier, where the second login credential is a credential that is generated after the first device establishes a trust relationship with a user account of the target application and that is used by the first device to log in to the user account; determining whether the first login credential is consistent with the second login credential, to obtain a first determining result; and if the first determining result indicates that the first login credential is consistent with the second login credential, triggering a procedure of logging in to the target application on the first device by using the user account.

An embodiment of this specification provides a login procedure triggering method, including: obtaining, by a first device, a first operation of starting a target application by a user; displaying a login page based on the first operation, where the login page includes account information of a user account and a login operation control used to indicate that the first device serves as a trusted device and logs in to the target application by using the user account; obtaining a second operation performed by the user on the login operation control; generating, based on the second operation, a login request used to request to log in to the target application by using the user account, where the login request includes the first login credential and a first device identifier of the first device; and sending the login request to a server, so that after verification of the first login credential succeeds, the server triggers a procedure of logging in to the target application on the first device by using the user account.

An embodiment of this specification provides a trusted device setting method, including: obtaining, by a second device, a trusted device setting page that is sent by a server and that includes device information of a historical login device, where the historical login device is a device on which a user account is used to log in to a target application; displaying the trusted device setting page, where the trusted device setting page includes a first confirmation control; obtaining a first confirmation operation performed by a user on the first confirmation control; generating a trusted device setting request based on the first confirmation operation, where the trusted device setting request includes a device identifier of a device that is in the historical login device and that is determined by the user to be set as a trusted device; and sending the trusted device setting request to the server, so that the server generates a login credential corresponding to the trusted device, where the login credential is a login credential used to log in to the target application by using the user account.

An embodiment of this specification provides a login procedure triggering apparatus, including: an information obtaining module, configured to obtain a login request that is sent by a first device and that is used to log in to a target application, where the login request includes a first login credential and a first device identifier of the first device; a credential determining module, configured to determine a second login credential corresponding to the first device identifier, where the second login credential is a credential that is generated after the first device establishes a trust relationship with a user account of the target application and that is used by the first device to log in to the user account; a determining module, configured to determine whether the first login credential is consistent with the second login credential, to obtain a first determining result; and a login procedure triggering module, configured to: if the first determining result indicates that the first login credential is consistent with the second login credential, trigger a procedure of logging in to the target application on the first device by using the user account.

An embodiment of this specification provides a login procedure triggering apparatus, including: a first operation obtaining module, configured to obtain a first operation of starting a target application by a user; a page display module, configured to display a login page based on the first operation, where the login page includes account information of a user account and a login operation control used to indicate that the first device serves as a trusted device and logs in to the target application by using the user account; a second operation obtaining module, configured to obtain a second operation performed by the user on the login operation control; a request generation module, configured to generate, based on the second operation, a login request used to request to log in to the target application by using the user account, where the login request includes the first login credential and a first device identifier of the first device; and a request sending module, configured to send the login request to a server, so that after verification of the first login credential succeeds, the server triggers a procedure of logging in to the target application on the first device by using the user account.

An embodiment of this specification provides a trusted device setting apparatus, including: a setting page obtaining module, configured to obtain a trusted device setting page that is sent by a server and that includes device information of a historical login device, where the historical login device is a device on which a user account is used to log in to a target application; a setting page display module, configured to display the trusted device setting page, where the trusted device setting page includes a first confirmation control; a confirmation operation obtaining module, configured to obtain a first confirmation operation performed by a user on the first confirmation control; a setting request generation module, configured to generate a trusted device setting request based on the first confirmation operation, where the trusted device setting request includes a device identifier of a device that is in the historical login device and that is determined by the user to be set as a trusted device; and a setting request sending module, configured to send the trusted device setting request to the server, so that the server generates a login credential corresponding to the trusted device, where the login credential is a login credential used to log in to the target application by using the user account.

An embodiment of this specification provides a login procedure triggering device, including at least one processor; and a storage communicatively connected to the at least one processor. The storage stores instructions that can be executed by the at least one processor, and the instructions are executed by the at least one processor, to enable the at least one processor to perform the following operations: obtaining a login request that is sent by a first device and that is used to log in to a target application, where the login request includes a first login credential and a first device identifier of the first device; determining a second login credential corresponding to the first device identifier, where the second login credential is a credential that is generated after the first device establishes a trust relationship with a user account of the target application and that is used by the first device to log in to the user account; determining whether the first login credential is consistent with the second login credential, to obtain a first determining result; and if the first determining result indicates that the first login credential is consistent with the second login credential, triggering a procedure of logging in to the target application on the first device by using the user account.

An embodiment of this specification provides a login procedure triggering device, including at least one processor; and a storage communicatively connected to the at least one processor. The storage stores instructions that can be executed by the at least one processor, and the instructions are executed by the at least one processor, to enable the at least one processor to perform the following operations: obtaining a first operation of starting a target application by a user; displaying a login page based on the first operation, where the login page includes account information of a user account and a login operation control used to indicate that the first device serves as a trusted device and logs in to the target application by using the user account; obtaining a second operation performed by the user on the login operation control; generating, based on the second operation, a login request used to request to log in to the target application by using the user account, where the login request includes the first login credential and a first device identifier of the first device; and sending the login request to a server, so that after verification of the first login credential succeeds, the server triggers a procedure of logging in to the target application on the first device by using the user account.

An embodiment of this specification provides a trusted device setting device, including at least one processor; and a storage communicatively connected to the at least one processor. The storage stores instructions that can be executed by the at least one processor, and the instructions are executed by the at least one processor, to enable the at least one processor to perform the following operations: obtaining a trusted device setting page that is sent by a server and that includes device information of a historical login device, where the historical login device is a device on which a user account is used to log in to a target application; displaying the trusted device setting page, where the trusted device setting page includes a first confirmation control; obtaining a first confirmation operation performed by a user on the first confirmation control; generating a trusted device setting request based on the first confirmation operation, where the trusted device setting request includes a device identifier of a device that is in the historical login device and that is determined by the user to be set as a trusted device; and sending the trusted device setting request to the server, so that the server generates a login credential corresponding to the trusted device, where the login credential is a login credential used to log in to the target application by using the user account.

An embodiment of this specification provides a computer-readable medium. The computer-readable medium stores computer-readable instructions, and the computer-readable instructions can be executed by a processor to implement the login procedure triggering method or the trusted device setting method.

Embodiments of this specification can achieve the following beneficial effects: In the embodiments of this specification, the login request that is sent by the first device and that is used to log in to the target application includes the first login credential. If it is determined that the first login credential is consistent with the second login credential that is used by the first device to log in to the user account, the procedure of logging in to the target application on the first device by using the user account can be triggered. Therefore, when the user logs in to the target application on the first device, the user does not need to enter account verification information such as a password and a verification code. In this way, user operations and login time consumption can be reduced, and login convenience is improved.

### BRIEF DESCRIPTION OF DRAWINGS

To describe the technical solutions in embodiments of this specification or in a related technology more clearly, the following briefly describes the accompanying drawings needed for describing the embodiments or the related technology. Clearly, the accompanying drawings in the following descriptions merely show some embodiments of this specification, and a person of ordinary skill in the art can still derive other drawings from these accompanying drawings without creative efforts.
FIG. 1 is a schematic flowchart of an overall solution of a login procedure triggering method according to an embodiment of this specification;
FIG. 2 is a schematic flowchart of a login procedure triggering method according to an embodiment of this specification;
FIG. 3 is a schematic diagram of a trusted device setting page according to an embodiment of this specification;
FIG. 4 is a schematic flowchart of a login procedure triggering method according to an embodiment of this specification;
FIG. 5 is a schematic diagram of a login page according to an embodiment of this specification;
FIG. 6 is a schematic flowchart of a trusted device setting method according to an embodiment of this specification;
FIG. 7 is a swimlane diagram of a login procedure triggering method according to an embodiment of this specification;
FIG. 8 is a schematic structural diagram of a login procedure triggering apparatus corresponding to FIG. 2 according to an embodiment of this specification;
FIG. 9 is a schematic structural diagram of a login procedure triggering apparatus corresponding to FIG. 4 according to an embodiment of this specification;
FIG. 10 is a schematic structural diagram of a trusted device setting apparatus corresponding to FIG. 6 according to an embodiment of this specification; and
FIG. 11 is a schematic structural diagram of a login procedure triggering device corresponding to FIG. 2 or FIG. 4 or a trusted device setting device corresponding to FIG. 6 according to an embodiment of this specification.

### DESCRIPTION OF EMBODIMENTS

To make the objectives, technical solutions, and advantages of one or more embodiments of this specification clearer, the following clearly and comprehensively describes the technical solutions in the one or more embodiments of this specification with reference to corresponding accompanying drawings and specific embodiments of this specification. Clearly, the described embodiments are merely some but not all of the embodiments of this specification. All other embodiments obtained by a person of ordinary skill in the art based on the embodiments of this specification without creative efforts shall fall within the protection scope of the one or more embodiments of this specification.

The following describes in detail the technical solutions provided in the embodiments of this specification with reference to the accompanying drawings.

In a related technology, after a terminal application of a terminal device logs out of a user account, if the account needs to be logged in to again, the account needs to be logged in to again in a login verification manner such as entering a password, a verification code, etc. When the account is logged in to alternately on different devices, an operation such as entering a password, a verification code, etc. needs to be performed each time.

To overcome the disadvantage in the related technology, this solution provides the following embodiments:

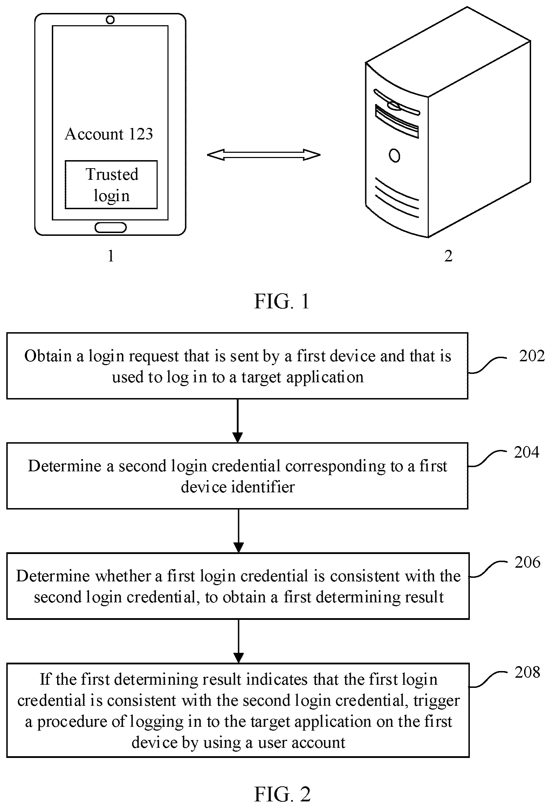

FIG. 1 is a schematic flowchart of an overall solution of a login procedure triggering method according to an embodiment of this specification. As shown in FIG. 1, the solution can include a first device 1 and a server 2. The first device can be a device used to log in to a target application. After a user enables the target application on the first device 1, a terminal page can display a login page that is used to log in to the target application by using a user account. The page can further include a login control. The user triggers the first device to log in to the target application through tapping or in another manner. The first device 1 can use a login request to carry a first login credential, and send the login request to the server 2. The first login credential can be a credential that is stored on the first device and that is used to log in to the target application. The server 2 can obtain the first login credential included in the login request, and verify the credential. After verification succeeds, the first device can be allowed to log in to the target application by using the user account. The server can determine a second login credential that is generated after the first device establishes a trust relationship with the user account of the target application and that is used by the first device to log in to the user account, and determine whether the first login credential is consistent with the second login credential. If the first login credential is consistent with the second login credential, it can be determined that verification of the login request sent by the first device can succeed, and the first device can be allowed to log in to the target application by using the user account. In this embodiment of this specification, a login credential can be used to replace verification information such as a password or a verification code entered by a user in a related technology. In a manner in which login is performed by using the login credential, the user does not need to enter the verification information, to simplify user operations and improve login efficiency.

The following specifically describes a login procedure triggering method according to an embodiment of this specification with reference to the accompanying drawings. FIG. 2 is a schematic flowchart of a login procedure triggering method according to an embodiment of this specification. From a program perspective, the procedure can be performed by a program or an application client that is loaded on an application server.

As shown in FIG. 2, the procedure can include step 202 to step 208.

Step 202: Obtain a login request that is sent by a first device and that is used to log in to a target application, where the login request includes a first login credential and a first device identifier of the first device.

Step 204: Determine a second login credential corresponding to the first device identifier, where the second login credential is a credential that is generated after the first device establishes a trust relationship with a user account of the target application and that is used by the first device to log in to the user account.

The first login credential can be a login credential that is locally stored by the first device and that is used to log in to the target application. The second login credential can be a login credential that corresponds to the first device and that is stored in a server or on a cloud. The second login credential can be a credential that is generated for the first device after the first device establishes a trust relationship with the user account of the target application or after the first device is set as a trusted device of the user account and that is used to log in to the target application by using the user account. The second login credential corresponds to the first device. Different devices correspond to different login credentials. The second login credential can only be used to log in to the target application by using the user account on the first device. In this embodiment of this specification, after a login credential is generated for the first device, the credential can be stored in the server or on the cloud, and the login credential can also be sent to the first device. In actual applications, if the first device is not attacked or another security problem occurs, the first login credential stored in the first device needs to be consistent with a second login credential determined by the server.

In consideration that a login credential stored in the first device may change due to some unsafe factors in actual applications, herein, the first login credential is used to represent a login credential that is stored in the first device and that may change, and the second login credential is used to represent an unchanged login credential that is stored in the server or on the cloud and that corresponds to the first device. "First" and "second" are merely used to distinguish one entity or operation from another entity or operation, and do not necessarily require or imply that there is any actual sequence between these entities or operations.

From a computer perspective, the login credential can be a string including a specific character. After obtaining the login request sent by the first device, the server can extract, based on the specific character, the first login credential included in the login request.

The first device identifier of the first device can be a unique identifier of the first device. For example, the identifier can be used by the server to distinguish between different devices.

Step 206: Determine whether the first login credential is consistent with the second login credential, to obtain a first determining result.

Step 208: If the first determining result indicates that the first login credential is consistent with the second login credential, trigger a procedure of logging in to the target application on the first device by using the user account.

If the first login credential is consistent with the second login credential, it can indicate that verification of the login request sent by the first device succeeds, and the first device can be allowed to log in to the target application by using the user account. The server can trigger the user account to log in to the target application on the first device. Specifically, the server can send, to the first device, prompt information indicating a login success, or can send a page, for example, a home page or a page browsed by the user last time, of the target application after the user account is used to log in to the target application. The first device can display corresponding page content. In actual applications, if the first login credential is inconsistent with the second login credential, it can indicate that verification of a login manner in which the first device logs in to the target application by using a login credential cannot succeed, prompt information indicating that trusted login fails can be sent to the first device, or a login verification page for entering verification information such as a password and a verification code can be sent to the first device, so that the first device can log in to the target application based on verification information provided by the user.

The target application can be understood as a terminal application that the first device can log in to. The user account can be a login account determined when the user registers as a user of the target application, and can be a mailbox number, a mobile phone number, a user ID, etc., or can be a user-defined character that meets a login requirement of the target application, etc. A specific form is not specifically limited herein.

It should be understood that in the method described in one or more embodiments of this specification, sequences of some steps in the method can be exchanged with each other based on an actual requirement, or some steps in the method can be omitted or deleted.

In the method in FIG. 2, the login request that is sent by the first device and that is used to log in to the target application includes the first login credential. If it is determined that the first login credential is consistent with the second login credential that is used by the first device to log in to the user account, the procedure of logging in to the target application on the first device by using the user account can be triggered. Therefore, when the user logs in to the target application on the first device, the user does not need to enter account verification information such as a password and a verification code. In this way, user operations and login time consumption can be reduced, and login convenience is improved.

Based on the method in FIG. 2, this embodiment of this specification further provides some specific implementation solutions, which are described below.

To further ensure security of the user account, optionally, in this embodiment of this specification, before the procedure of logging in to the target application on the first device by using the user account is triggered, the method can further include: determining whether the first login credential is within a validity period of the first login credential, to obtain a second determining result.

The triggering a procedure of logging in to the target application on the first device by using the user account can specifically include: if the second determining result indicates that the first login credential is within the validity period of the first login credential, triggering the procedure of logging in to the target application on the first device by using the user account.

In actual applications, the first login credential sent by the first device can include a generation time of the first login credential, and the determining whether the first login credential is within a validity period of the first login credential can include: determining whether a time difference between the generation time of the first login credential and a time at which the login request is obtained is less than or equal to a preset threshold. If the time difference between the generation time of the first login credential and the time at which the login request is obtained is less than or equal to the preset threshold, it can indicate that the first login credential is within the validity period.

In actual applications, whether a login credential is valid can alternatively be determined by the first device. In actual applications, the login request sent by the first device can be generated based on a login operation performed by the user on the first device. After obtaining the login operation of the user, the first device can determine whether a time difference between the generation time of the first login credential and a time at which a user operation is obtained is less than or equal to the preset threshold. If the time difference between the generation time of the first login credential and the time at which the user operation is obtained is less than or equal to the preset threshold, it can be determined that the first login credential is within the validity period, and the login request can be sent to the server. If the first login credential is not within the validity period, the first device can display a page for entering the verification information by the user, to send a login verification request to the server based on the verification information provided by the user. After verification succeeds, the first device can log in to the target application by using the user account.

In this embodiment of this specification, a validity period of the second login credential can also be determined to determine whether verification of the login request sent by the first device succeeds. In an implementation, after the second login credential is determined, whether a time difference between a generation time of the second login credential and a time at which the login request is obtained is less than or equal to the preset threshold. If the time difference is less than or equal to the preset threshold, it can be determined that the second login credential is within the validity period. If the second login credential is within the validity period, the login request sent by the first device can be verified by using the second login credential. The preset threshold can be set according to an actual requirement, for example, 10 days, 20 days, or 30 days. A specific threshold is not specifically limited herein.

In actual applications, the login credential can also include time information indicating a validity period of the login credential, for example, a start time and an end time of the validity period of the login credential. In this embodiment of this specification, whether the login credential is valid can be further determined based on the time information of the validity period. For example, the first device can determine whether a time at which user operation is obtained is within the validity period between a start time and an end time of the validity period of the first login credential, and the server can also determine whether the time at which the login request is obtained is within the validity period between a start time and an end time of the validity period of the second login credential. In actual applications, a specific determining manner can be set according to an actual requirement, which is not specifically limited herein.

In this embodiment of this specification, a login credential generated by the server for a device can further include a device identifier of the device. Optionally, before the determining a second login credential corresponding to the first device identifier, the method can further include: parsing the first login credential, to obtain a second device identifier included in the first login credential; and determining whether the second device identifier is consistent with the first device identifier, to obtain a third determining result.

The determining a second login credential corresponding to the first device identifier can specifically include: if the third determining result indicates that the second device identifier is consistent with the first device identifier, searching for the second login credential corresponding to the first device identifier.

In actual applications, if the third determining result indicates that the second device identifier is inconsistent with the first device identifier, it can indicate that the login credential sent by the first device is not for the device, and the login credential is invalid. The server can terminate the login request sent by the first device for requesting to log in to the target application by using the login credential, and can send, to the first device, information indicating that trusted login fails, or can send the login verification page to the first device.

In actual applications, the user usually does not frequently log in to the same account on different devices. To ensure security, a quantity of times of trusted login can be further set. For example, a quantity of times that the user account is allowed to log in to the target application through trusted login within one day is 10. For another example, a quantity of times that the user account is allowed to log in to the target application in a manner of trusted login within one week is 20. If a quantity of times exceeds this quantity, the user needs to log in by entering the verification information such as the password or the verification code. The method in this embodiment of this specification can further include: determining, based on the user account, whether a quantity of times that the target application logs in to the user account by using a login credential within a preset time period before the login request sent by the first device is obtained is greater than or equal to a preset quantity of times; and if the quantity is less than the preset quantity of times, a verification procedure for the first login credential can be performed, for example, step 204 to step 208. If the quantity of times that the target application logs in to the user account by using the login credential within the preset time period is greater than or equal to the preset quantity of times, processing of the login request can be terminated, it can be determined that current trusted login fails, and reminder information can be further sent to the first device, or the login verification page can be sent to the first device. A specific value of the preset quantity of times can be set according to an actual requirement. The preset quantity of times can indicate a total quantity of times that different devices are allowed to log in to the user account by using the login credential. A single device can be used as a dimension, and can represent a quantity of times that the same device is allowed to log in to the user account by using the login credential.

In actual applications, a procedure of determining whether the preset quantity of times is exceeded can alternatively be executed on the first device. The first device can count a quantity of times that the device once logs in to the target application by using the user account by using the login credential within the preset time period, and can determine whether the quantity of times that the first device once logs in to the target application by using the user account by using the login credential within the preset time period is greater than or equal to the preset quantity of times. If the quantity is greater than or equal to the preset quantity of times, the first device can no longer be allowed to log in to the user account through trusted login, and a login verification page can be displayed. If the quantity of times that the first device once logs in to the target application by using the user account by using the login credential within the preset time period is less than the preset quantity of times, a login page of trusted login can be displayed.

In this embodiment of this specification, the user can set a trusted device in a device according to an actual requirement, and a device determined as a trusted device can quickly log in to the target application by using the login credential. Optionally, in this embodiment of this specification, before the obtaining a login request that is sent by a first device and that is used to log in to a target application, the method can further include: obtaining device information of a historical login device on which the user account is used to log in to the target application, where the historical login device includes the first device; generating a trusted device setting page that includes the device information of the historical login device, where the device information includes at least one of a device model or a user-defined device name; sending the trusted device setting page to a second device, where the second device is a device that is in a login state of logging in to the target application by using the user account before the first device sends the login request; obtaining a trusted device setting request sent by the second device on the trusted device setting page, where the trusted device setting request includes the first device identifier of the first device; and determining the first device as a trusted device based on the first device identifier of the first device, where the trusted device is used to represent a device that has permission to log in to the user account in the target application by using a login credential.

The historical login device can include a device that once logs in to the target application by using the user account within the preset time period, for example, can be a device that once logs in to the target application by using the user account within a time period such as recent one month, recent three months, or recent one year. A device that is still in a login state after the user account is used to log in to the target application can also be used as a historical login device.

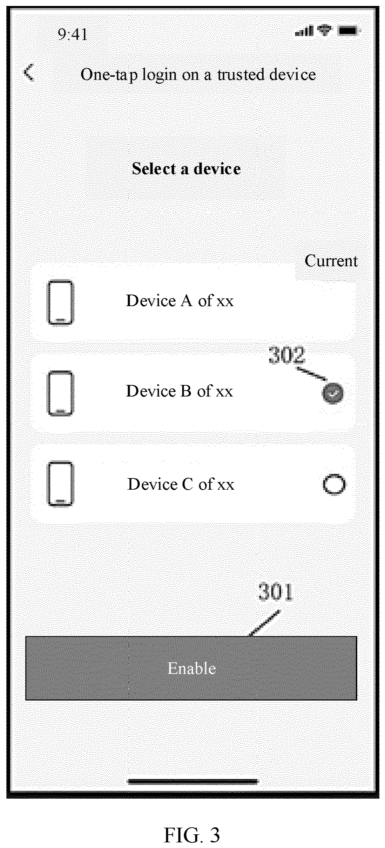

FIG. 3 is a schematic diagram of a trusted device setting page according to an embodiment of this specification. As shown in FIG. 3, assuming that the second device is a device that is in a login state of logging in to the target application by using the user account before the first device sends the login request, the page can be a setting page displayed on the second device. The page can include device information of all historical login devices, and can be a device model, a code, etc., or can be a user-defined name, etc. As shown in FIG. 3, "Device A of xx", "Device B of xx", and "Device C of xx" can be user-defined device names. In actual applications, a setting function of a terminal application can include a setting of the device name, and the server can obtain the user-defined device name.

As shown in FIG. 3, the page can include a first confirmation control 301 that is used to confirm a trusted device, for example, an "Enable" control. The user taps the control. The second device can send the trusted device setting request to the server. The trusted device setting request can include the first device identifier of the first device that is confirmed by the user to be set as a trusted device. As shown in FIG. 3, the page can further include a selection control 302 for selecting a device. When the control is in a selected state, it can be considered that the user confirms to set the selected device as a trusted device. The second device can generate the trusted device setting request based on a state of the selection control. The request can include a device identifier of each selected device. The user can select one or more devices as devices that are set as trusted devices. After obtaining the trusted device setting request sent by the second device, the server can determine that a device corresponding to a device identifier included in the request is a trusted device that has permission to log in to the user account in the target application by using the login credential. For example, a corresponding trusted device list can be generated for the user account and the target application.

In this embodiment of this specification, a trusted device setting page can further include device information of the second device, for example, "Device A of xx" shown in FIG. 3. The page can include a status identifier of a device in a login state. "Current" shown in FIG. 3 can indicate that "Device A of xx" is a device that currently logs in to the target application by using the user account, and another unmarked device can be a device that once logs in to the user account before the device A logs in to the user account.

The method in this embodiment of this specification can further include: determining the second device as a trusted device. Specifically, a device identifier of the second device can be stored in the trusted device list.

In actual applications, all the historical login devices can be further sorted based on factors such as a login frequency, continuous duration of the login state, and a login time, to preferentially display a device frequently used by the user. For example, a weight can be set for each factor. A higher login frequency can have a higher weight, longer continuous duration of the login state can have a higher weight, and a login time closer to a current time can have a higher weight. Weighted summation can be performed on all weights, comprehensive scores corresponding to all devices are determined, and the devices are displayed in descending order of scores. In actual applications, if the user has a relatively large quantity of historical login devices, a preset quantity of devices ranked in front can be selected and displayed on the setting page based on a sequence.

In actual applications, the first device and the second device can be the same device, or can be different devices.

In this embodiment of this specification, the server can generate login credentials for all trusted devices. A login credential corresponds to a device. Different devices correspond to different login credentials. Optionally, in this embodiment of this specification, after the determining the first device as a trusted device, the method can further include: generating the second login credential corresponding to the first device based on the first device identifier of the first device; sending the second login credential to the first device; and storing a correspondence between the second login credential and the first device.

The server can store the second login credential and the correspondence between the second login credential and the first device. In actual applications, the second login credential, the first device, and the user account have a correspondence. For example, all trusted devices and login credentials respectively corresponding to the devices can be maintained in the trusted device list. In actual applications, the above-mentioned information can be stored in the server, can be stored on the cloud, or can be stored in a blockchain system. The server can further send the generated second login credential to the first device, so that the first device performs login based on the login credential.

Similarly, in this embodiment of this specification, after the determining the second device as a trusted device, the method can further include: generating a third login credential corresponding to the second device based on a device identifier of the second device; sending the third login credential to the second device; and storing a correspondence between the third login credential and the second device.

Similar to the above-mentioned method, the server can store the third login credential and the correspondence between the third login credential and the second device. In actual applications, the third login credential, the second device, and the user account have a correspondence, and the correspondence can be stored in the trusted device list, or may be stored in storage space such as the server, the cloud, the blockchain system, etc. The server can further send the generated third login credential to the second device, so that the second device performs login based on the login credential.

In actual applications, after the user logs in to the user account on the second device, when the second device is in a login state, the user can set the trusted device in the second device. It can be understood that when the trusted device is set, the second device is in the login state. After the trusted device is set, the server can send the generated login credential for the second device to the second device.

To ensure security of the user account, in this embodiment of this specification, when the user sets the trusted device, the verification information of the user can also be collected, and only after verification succeeds, a device determined by the user can be determined as a trusted device. Optionally, in this embodiment of this specification, before the determining the first device as a trusted device, the method can further include: obtaining first to-be-verified information sent by the second device; and determining whether the first to-be-verified information is consistent with first preset verification information, to obtain a fourth determining result, where the first preset verification information includes at least one of registration verification information or identity authentication information, the registration verification information is verification information provided when the user registers with the target application by using the user account, and the identity authentication information is identity information provided in a process in which the user performs user authentication based on the user account; and the determining the first device as a trusted device can specifically include: determining the first device as a trusted device if the fourth determining result indicates that the first to-be-verified information is consistent with the first preset verification information.

In this embodiment of this specification, in a process of setting the trusted device, the second device can further display a page used to obtain the first to-be-verified information provided by the user. For example, the second device can display a page used to prompt the user to enter an account password and a verification code, or can display a user identity information collection page, for example, an information collection page used to collect a face, a fingerprint, and an iris of the user. The first to-be-verified information can include information indicating a user identity, for example, a face, a fingerprint, or an iris, or can include information that can be used to verify an account, for example, an account password or a verification code. Specific verification information is not specifically limited herein, and can be set according to an actual requirement.

In actual applications, after obtaining the trusted device setting request sent by the second device, the server can send a verification information obtaining request to the second device, so that the second device displays an information collection page to obtain the verification information provided by the user. In another implementation, the second device can alternatively actively display a page for obtaining the verification information. For example, after a confirmation operation performed by the user on the trusted device is obtained, a page for obtaining the first to-be-verified information provided by the user can be displayed. The second device can generate the trusted device setting request based on the obtained first to-be-verified information and a device identifier of a trusted device selected by the user, and send the trusted device setting request to the server. In actual applications, the first to-be-verified information and the trusted device setting request can be separately sent to the server. A specific sending form is not limited herein.

After obtaining the first to-be-verified information provided by the user, the server can compare the first to-be-verified information with the pre-stored first preset verification information of the user account, to determine consistency between the first to-be-verified information and the first preset verification information. If it is determined that the first to-be-verified information is consistent with the first preset verification information, it can indicate that setting the trusted device is agreed upon by the user, and the server can determine that a device for which the setting request is targeted is a trusted device.

In this embodiment of this specification, the first preset verification information can include the registration verification information, for example, a login password, provided when the user registers with the target application by using the user account; or can include identity information provided in a process in which the user performs user authentication by using the user account, for example, biometric feature information such as a face, an iris, or a fingerprint that can represent the user identity and that is determined in a real name authentication process; or can be information in an identity document provided by the user. Specific to-be-verified information and corresponding preset verification information can be set according to an actual requirement. This is not specifically limited herein.

In actual applications, the setting page can further include a clause used by the user to learn about the trusted device and a trusted login service. After the user learns of the clause, a corresponding clause can be selected, and this can indicate that the user has authorized the server to obtain user information that needs to be obtained for performing a trusted login procedure.

For an image type information, it can be understood that whether two pieces of information are consistent can be determined as follows: Whether a similarity between the two pieces of information is greater than or equal to a preset threshold, and when the similarity is greater than or equal to the preset threshold, it can be considered that the two pieces of information are similar.

To ensure security of user account information, in this embodiment of this specification, after the determining the first device as a trusted device, and after logging in to the target application through verification, the first device needs to obtain the second login credential sent by the server, so that the first device can log in by using the login credential in a subsequent login process. Optionally, in this embodiment of this specification, before the sending the second login credential to the first device, the method can further include: obtaining a login verification request sent by the first device, where the login verification request includes account information of the user account and second to-be-verified information provided by a user on the first device; determining whether the second to-be-verified information is consistent with second preset verification information, to obtain a fifth determining result, where the second preset verification information includes at least one of registration verification information or identity authentication information, the registration verification information is verification information provided when the user registers with the target application by using the user account, and the identity authentication information is identity information provided in a process in which the user performs user authentication based on the user account; and if the fifth determining result indicates that the second to-be-verified information is consistent with the second preset verification information, allowing the first device to log in to the target application by using the user account; and the sending the second login credential to the first device specifically includes: sending the second login credential to the first device when the first device is in a login state of logging in to the target application by using the target account.

The account information can include information such as an account name, a mailbox number, or a mobile phone number that represents an account. Similar to the first to-be-verified information, the second to-be-verified information can be account information such as an account password or a verification code, or can be user biometric information such as a face or a fingerprint of the user. A specific verification process can be similar to the above-mentioned verification process. Details are not described herein again.

In this embodiment of this specification, a quantity of times of using the same login credential can be limited. After the quantity reaches a preset quantity of times, the login credential can be determined to be invalid. When the login credential is subsequently used again, verification of the login credential cannot succeed. In other words, the login credential cannot be used to execute a trusted login procedure in which information such as a password or a verification code does not need to be entered.

In an implementation, in this embodiment of this specification, the login credential can be a credential that can be used once. After the server triggers the procedure of logging in to the target application on the first device by using the user account, the server can further delete the correspondence between the second login credential and the first device, and determine the second login credential as an invalid credential.

After the second login credential fails, the server can further generate a new credential, so that the device subsequently logs in to the user account through trusted login by using the new credential. Optionally, the method in this embodiment of this specification can further include: generating a fourth login credential based on the first device identifier of the first device; storing a correspondence between the fourth login credential and the first device; and sending the fourth login credential to the first device.

In actual applications, after the first device logs in to the user account by using the first login credential, the server can delete the second login credential used for current login or mark the second login credential as an invalid state, or can generate the fourth login credential for the first device, and send the fourth login credential to the first device when the first device is in the login state.

In this embodiment of this specification, the first login credential, the second login credential, the third login credential, and the fourth login credential are used to clearly describe different names of the method provided in this embodiment of this specification. Manners of forming, generating, and using all login credentials can be similar. For the above-mentioned description content, refer to related content. In this embodiment of this specification, login experience of a multi-device user can be greatly improved by circularly issuing a copy-proof one-time login credential on the trusted device.

In this embodiment of this specification, the same user account can be simultaneously used in one device. After the first device logs in, another device logs out. Optionally, in this embodiment of this specification, after the triggering a procedure of logging in to the target application on the first device by using the user account, the method can further include: canceling a login state of the user account in another device.

To enable the user to conveniently use a trusted login function, in this embodiment of this specification, reminder information used to prompt the user to set the trusted device can be further sent to a device of the user. Optionally, the method in this embodiment of this specification can further include: determining whether the user account is used to log in to a plurality of devices within a preset time period, to obtain a fifth determining result; and if the fifth determining result indicates that the user account is used to log in to the plurality of devices within the preset time period, sending, to at least one of the plurality of devices, reminder information used to prompt a user to set a trusted device, where the trusted device is used to represent a device that has permission to log in to the user account in the target application by using a login credential. The reminder information can include a control used to point to the setting page that is in the target application and that is used to set the trusted device.

In actual applications, the reminder information can be sent to a login device whose user account is in a login state. The reminder information can be displayed on the login device. The user can perform a preset operation on the reminder information, and can jump to the setting page used to set the trusted device, for example, the trusted device setting page shown in FIG. 3. The prompt information can further include path description information for entering the trusted device setting page, and the user can gradually enter the trusted device setting page based on the path description information.

In actual applications, the prompt information can be sent to user equipment by using an information floating layer, a system message, etc. The server can further count a quantity of times that the user disables, unreads, or ignores the prompt information. If the quantity of times exceeds a preset quantity of times, it can be determined that the user does not want to use trusted login. To reduce disturbance to the user, the prompt information is possibly not sent to the user account within a preset time period, for example, one month or three months.

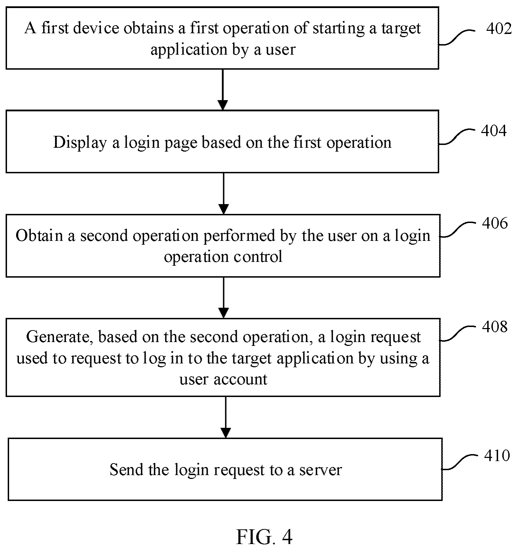

Based on the same idea, an embodiment of this specification further provides a login procedure triggering method that is performed by a first device and that corresponds to the above-mentioned method. FIG. 4 is a schematic flowchart of a login procedure triggering method according to an embodiment of this specification. As shown in FIG. 4, the method can include step 402 to step 410.

Step 402: The first device obtains a first operation of starting a target application by a user.

In this embodiment of this specification, the target application can be an application such as a terminal application or a mini program loaded on the first device. A display page of the first device can include an identifier of the target application, for example, an icon or a name. The user can tap the identifier to open the target application. The target application can be an application with which the user registers in advance by entering information such as a user name, a user account, or a password. In actual applications, the user name and the user account can be the same or can be different. The target application can be an application of a type such as a payment type, a chat type, an entertainment type, or a life service type. This is not specifically limited herein.

Step 404: Display a login page based on the first operation, where the login page includes account information of the user account and a login operation control used to indicate that the first device serves as a trusted device and logs in to the target application by using the user account.

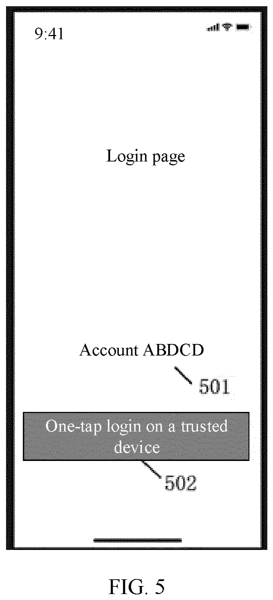

FIG. 5 is a schematic diagram of a login page according to an embodiment of this specification. As shown in FIG. 5, the login page can include account information 501 of the user account, and can further include a login operation control 502 used to log in to the user account. In actual applications, page information such as page content, a layout, and control description information can be set according to an actual requirement. This is not specifically limited herein.

Step 406: Obtain a second operation performed by the user on the login operation control.

Step 408: Generate, based on the second operation, a login request used to request to log in to the target application by using the user account, where the login request includes the first login credential and a first device identifier of the first device.

Still as described in FIG. 5, the user can tap the login operation control 502, and the first device can generate the login request based on the second operation of the user, and send the login request to the server. The login request can include the account information of the user account, and can further include the first login credential and the first device identifier of the first device that exist on the first device.

Step 410: Send the login request to a server, so that after verification of the first login credential succeeds, the server triggers a procedure of logging in to the target application on the first device by using the user account.

The server can verify the login request sent by the first device. For a specific verification manner, refer to the above-mentioned login procedure triggering method performed by the server. Details are not described herein again. After verification succeeds, the first device can log in to the target application by using the user account. In this embodiment of this specification, a login credential existing on the device can be used to log in to the user account, and the user does not need to enter verification information such as a password or a verification code, to simplify user operations and improve login efficiency.

The login credential can have a validity period, for example, 10 days or 30 days. The first login credential stored on the first device can include validity period information of the credential. Before the displaying a login page, the method can further include: obtaining, based on the first operation, the first login credential stored on the first device; and determining whether the first login credential is within the validity period of the first login credential; and the displaying a login page can specifically include: displaying the login page if the first login credential is within the validity period.

If the first login credential is not within the validity period, a verification information login page can be displayed. The user can enter verification information such as an account password, a verification code, or identity information on the verification information login page. After verification succeeds, the first device can also log in to the target application by using the user account. A manner of logging in to the target application by using the verification information login page can be the same as or similar to an existing login manner.

In this embodiment of this specification, to ensure security of the user account, a maximum quantity of times that trusted login can be performed for the user account by using the login credential, for example, 10 times in one day. Before the first device displays the login page, whether an accumulative quantity of times of logging in to the user account through trusted login within a preset time period exceeds a preset quantity of times can be further determined. If the quantity does not exceed the preset quantity of times, the login page can be displayed; or if the quantity exceeds the preset quantity of times, a login page for login verification can be displayed.

In actual applications, the user usually does not frequently log in to the same user account on the same device or different devices in a relatively short time. In this embodiment of this specification, whether a trusted device that is set by the user or the user account has a security risk can be further determined based on a frequency of logging in to the user account on the same device or different devices. For example, if the quantity of times of logging in to the user account through trusted login within the preset time period is greater than or equal to the preset quantity of times, it can be considered that the user account or the trusted device that is set by the user is at risk, and security prompt information can be sent to the user, or trusted login to the user account can be canceled, or trusted login permission of a trusted device at risk can be removed.

In this embodiment of this specification, the login credential can be a credential that is generated for a device after the server determines the device as a trusted device and that can be used to log in to the target application by using the user account. In this embodiment of this specification, before the generating a login request used to request to log in to the target application by using the user account, the method can further include: obtaining a second login credential sent by the server. The second login credential is a login credential that corresponds to the first device, that is generated by the server after the first device is determined as a trusted device, and that is used to log in to the target application by using the user account. The trusted device is used to represent a device that has permission to log in to the user account in the target application by using the login credential.

In actual applications, if the first device accurately receives the second login credential sent by the server, and the second login credential is also secure in a period of storing the credential, that is, if the credential is not changed after the first device obtains the second login credential, the first login credential included in the login request generated by the first device can be the same as the second login credential sent by the server to the first device. If the first device has a security problem or the login credential stored on the first device is maliciously operated, the first login credential stored on the first device may change, and is inconsistent with the second login credential sent by the server to the first device.

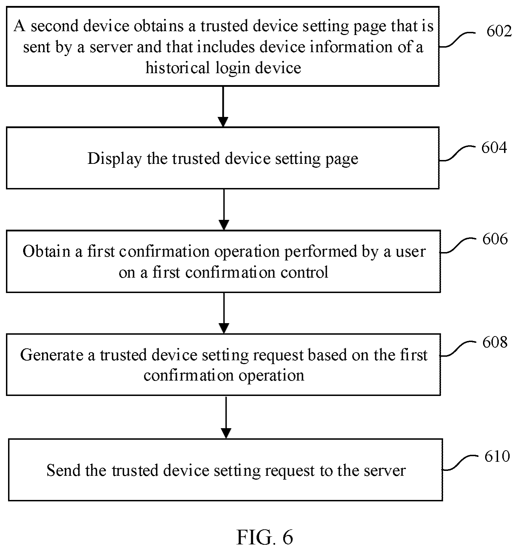

Based on the same idea, an embodiment of this specification further provides a trusted device setting method that is performed by a second device and that corresponds to the above-mentioned method. FIG. 6 is a schematic flowchart of a trusted device setting method according to an embodiment of this specification. As shown in FIG. 6, the method can include step 602 to step 610.

Step 602: The second device obtains a trusted device setting page that is sent by a server and that includes device information of a historical login device, where the historical login device is a device on which a user account is used to log in to a target application.

The second device can be a device in a login state of logging in to the target application by using the user account. After logging in to the target application by using the user account, the second device can enter the trusted device setting page. The page can include the device information of the historical login device, for example, a device name or a model.

In actual applications, a user can enter the trusted device setting page through a preset path. For example, the target application can include a setting item used to set the target application, and setting the trusted device can be one of application settings. A specific path can be set according to an actual application requirement.

Step 604: Display the trusted device setting page, where the trusted device setting page includes a first confirmation control.

Step 606: Obtain a first confirmation operation performed by the user on the first confirmation control.

Step 608: Generate a trusted device setting request based on the first confirmation operation, where the trusted device setting request includes a device identifier of a device that is in the historical login device and that is determined by the user to be set as a trusted device.

Step 610: Send the trusted device setting request to the server, so that the server generates a login credential that corresponds to a device determined by the user to be set as a trusted device and that is used to log in to the target application by using the user account.

FIG. 3 is a schematic diagram of a trusted device setting page according to an embodiment of this specification. The page can include a first confirmation control 301. The user taps the control, and the second device can obtain the first confirmation operation performed by the user on the first confirmation control, generate the trusted device setting request, and send the trusted device setting request to the server. On this page, the user can select one or more devices that are set as trusted devices. The trusted device setting request can include a device identifier of each device selected by the user, so that the server determines a trusted device, and generates a login credential for the trusted device.

To ensure security of the user account, in this embodiment of this specification, in a process of setting the trusted device, verification information of the user can be further collected. After verification succeeds, a device selected by the user can be determined as a trusted device. After the sending the trusted device setting request to the server, the method can further include: displaying an information obtaining page; obtaining, based on the information obtaining page, first to-be-verified information provided by the user; and sending the first to-be-verified information to the server, so that after verification of the first to-be-verified information succeeds, the server determines that the device determined by the user to be set as a trusted device is a trusted device.

The information obtaining page can be a page used by the user to enter the verification information, or can be a page used to collect biometric feature information of the user, and can be set according to an actual requirement. This is not specifically limited herein.

In this embodiment of this specification, the second device configured to set the trusted device can also serve as a trusted device, and the server can also generate a login credential for the second device. In this embodiment of this specification, the device determined by the user to be set as a trusted device can include the second device. The method can further include: obtaining a third login credential sent by the server. The third login credential is a login credential that corresponds to the second device and that is generated by the server based on a device identifier of the second device after the second device is determined as a trusted device.

In this embodiment of this specification, after setting of the trusted device is completed on the second device, the specified trusted device can be further canceled. A path for canceling a setting can be the same as a path for determining the setting. After the trusted device setting page is entered, a device that is set as a trusted device is selected. The setting page can display a control used to cancel a setting. For example, an "Enable" control shown in FIG. 3 can be changed to "Cancel". After the user taps the control, the second device can send, to the server, a setting canceling request for a device selected to cancel the setting of the trusted device. The server can delete the device from a trusted device list based on the request. After canceling the setting, the device needs to log in to the target application by entering the verification information.

In this embodiment of this specification, the server can obtain a request that is sent by the second device and that is used to remove the trusted device. The request can include a device identifier of a trusted device whose trust relationship is to be removed. Based on the request, a correspondence between the device and the user account can be deleted, or the device can be deleted from the trusted device list, or a login credential corresponding to the device can be deleted.

In actual applications, information about an associated trusted device can be displayed on any of trusted devices corresponding to the user account. For example, if the user completes the setting of the trusted device on the second device, after logging in to the user account on the first device, information about the trusted device can be displayed on a setting page of the target application of the first device. Subsequently, the user can perform, on the first device or the second device, an editing operation such as deleting or adding on the set trusted device. In a process of editing the trusted device, only after verification of the user succeeds, the user can perform the editing operation, or can store result information after the user performs editing.

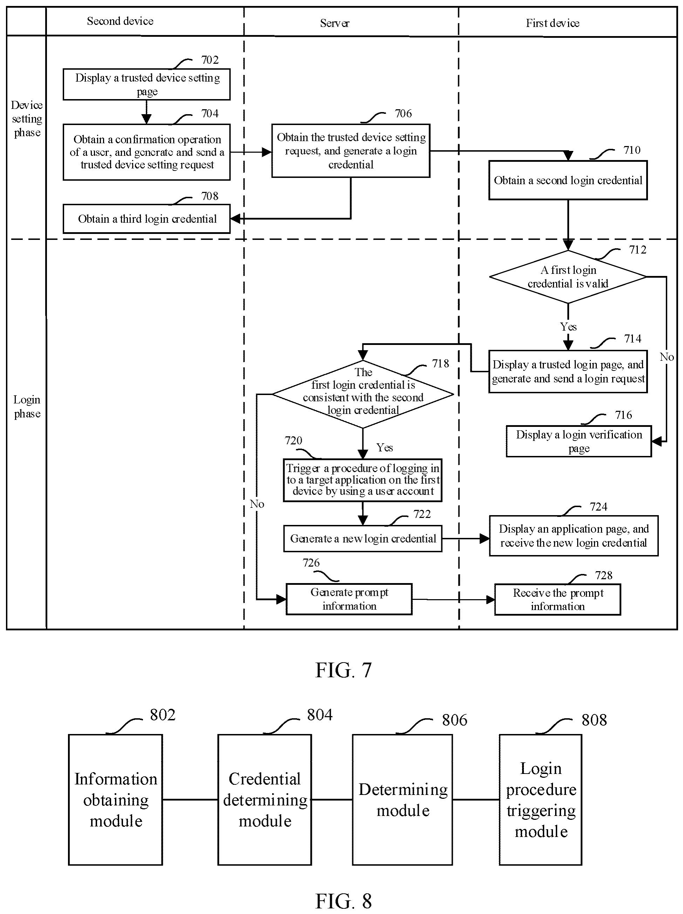

To describe more clearly the login procedure triggering method provided in the embodiments of this specification, FIG. 7 is a swimlane diagram of a login procedure triggering method according to an embodiment of this specification. As shown in FIG. 7, the solution can include a device setting phase and a login phase, and can specifically include step 702 to step 728.

Step 702: After a second device logs in to a target application by using a user account, a user can enter, through a preset path, a setting page used to set a trusted device, and the second device can display a trusted device setting page.

Step 704: The user can select the trusted device on the page, and can further perform a determining operation. The second device can generate a trusted device setting request based on an operation performed by the user on the page, and send the request to a server.

Step 706: The server obtains the trusted device setting request sent by the second device, and determines the trusted device based on a device identifier included in the request, and can further generate a corresponding login credential for each trusted device. Assuming that the trusted device includes a first device and a second device, the server can generate a second login credential corresponding to the first device and send the second login credential to the first device, or can generate a third login credential corresponding to the second device and send the third login credential to the second device.

Step 708: The second device can obtain the third login credential sent by the server, so that the second device can log in to the user account based on the login credential after logging out of the user account.

Step 710: The first device can further obtain the second login credential sent by the server. After the first device is determined as a trusted device, the first device needs to log in to the target application by using the user account through verification, and the first device can obtain the second login credential sent by the server.

Step 712: It is assumed that after obtaining the second login credential, the first device logs out of the user account, and then logs in to the target application by using the user account; and the first device can obtain an operation of enabling the target application by the user, and determine whether a local first login credential is valid. The first login credential can be understood as a login credential that is stored on the device after the second login credential sent by the server is obtained.

Step 714: If the first login credential is valid, a trusted login page can be displayed. The page can include a login control. Based on an operation performed by the user on the control, a login request that includes the first login credential can be generated and sent to the server.

Step 716: If the first login credential is invalid, a login verification procedure can be performed, and a login verification page is displayed. On this page, the user can enter verification information such as a password, a verification code, or biological feature information.

Step 718: After obtaining the login request sent by the first device, the server can determine whether the first login credential included in the request is consistent with the second login credential.

Step 720: If the first login credential is consistent with the second login credential, a procedure of logging in to the target application on the first device by using the user account can be triggered, and a state of the first device can be determined as a login state.

Step 722: The server can further determine that the second login credential is in an invalid state. For example, the second login credential can be deleted, or a new login credential can be generated for the first device and sent to the first device.

Step 724: The first device can display an application page corresponding to the target application after logging in to the user account, for example, a home page of the application, and a page mostly recently browsed by the user by using the user account. The new login credential sent by the server can also be received, and the previously stored first login credential can be invalidated. For example, the first login credential can be deleted.

Step 726: If the first login credential is inconsistent with the second login credential, the trusted login procedure can be terminated, and prompt information indicating that trusted login fails is generated and fed back to the first device.

Step 728: The first device can receive the prompt information fed back by the server. The first device can further display a login verification page, so that the user logs in to the user account by providing the verification information.

It is assumed that before the first device logs in to the user account, the second device is in a login state of the user account. After the first device logs in to the user account, the second device is kicked, and one user account is allowed to be used for login and use on one device simultaneously. It is assumed that the user wants to log in to the user account on the second device again. Because the second device has obtained the third login credential, the login credential stored on the second device can be used to log in to the user account in a manner similar to the above-mentioned manner. In addition, after initiating the login request by using a stored login credential, the second device can also invalidate the used login credential, and obtain the new login credential generated and sent by the server. Details of a specific process are not described herein again.

In this embodiment of this specification, when the user needs to switch to log in to the same user account on different devices, the user can perform trusted login by using the login credential, and the user does not need to enter verification information such as an account password or a verification code each time, to improve convenience. In addition, because the login credential is used to log in to the user account, the user does not need to provide verification information used for login each time, so that a device without a verification information obtaining function can also log in to the user account. For example, it is assumed that the user account is used to log in to the target application through verification, and biological feature information such as a face of the user needs to be collected. That is, a currently used device needs to have a function of collecting a biological feature, for example, needs to have a camera. It is assumed that the device does not have a camera and login cannot be performed on the device. In the method in this embodiment of this specification, because the user does not need to provide the verification information, even if the device does not have a camera, the user account can be logged in to on the device.

Based on the same idea, an embodiment of this specification further provides an apparatus corresponding to the above-mentioned method. FIG. 8 is a schematic structural diagram of a login procedure triggering apparatus corresponding to FIG. 2 according to an embodiment of this specification. As shown in FIG. 8, the apparatus can include: an information obtaining module 802, configured to obtain a login request that is sent by a first device and that is used to log in to a target application, where the login request includes a first login credential and a first device identifier of the first device; a credential determining module 804, configured to determine a second login credential corresponding to the first device identifier, where the second login credential is a credential that is generated after the first device establishes a trust relationship with a user account of the target application and that is used by the first device to log in to the user account; a determining module 806, configured to determine whether the first login credential is consistent with the second login credential, to obtain a first determining result; and a login procedure triggering module 808, configured to: if the first determining result indicates that the first login credential is consistent with the second login credential, trigger a procedure of logging in to the target application on the first device by using the user account.

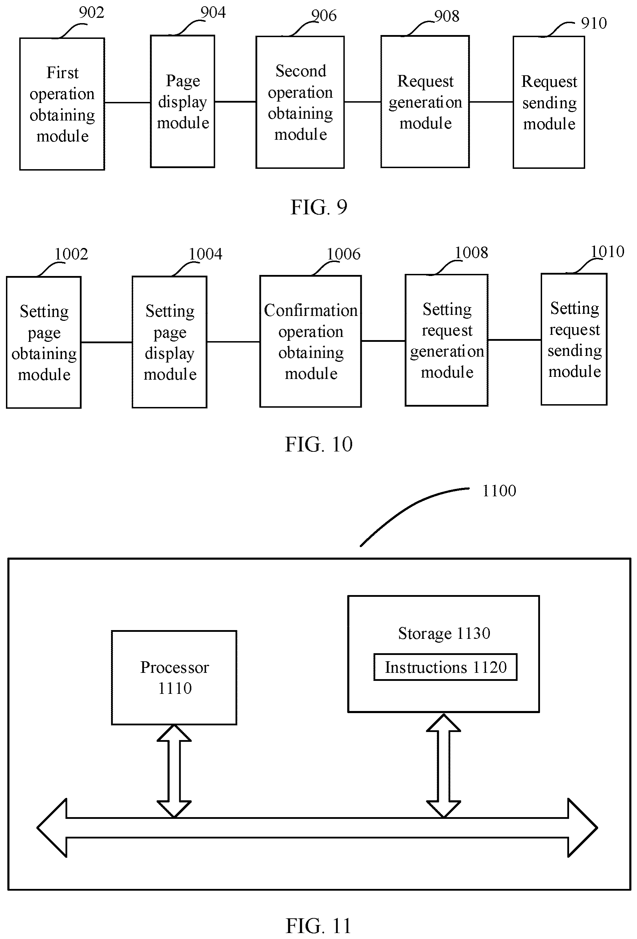

Based on the same idea, an embodiment of this specification further provides an apparatus corresponding to the above-mentioned method. FIG. 9 is a schematic structural diagram of a login procedure triggering apparatus corresponding to FIG. 4 according to an embodiment of this specification. As shown in FIG. 9, the apparatus can include: a first operation obtaining module 902, configured to obtain a first operation of starting a target application by a user; a page display module 904, configured to display a login page based on the first operation, where the login page includes account information of a user account and a login operation control used to indicate that the first device serves as a trusted device and logs in to the target application by using the user account; a second operation obtaining module 906, configured to obtain a second operation performed by the user on the login operation control; a request generation module 908, configured to generate, based on the second operation, a login request used to request to log in to the target application by using the user account, where the login request includes the first login credential and a first device identifier of the first device; and a request sending module 910, configured to send the login request to a server, so that after verification of the first login credential succeeds, the server triggers a procedure of logging in to the target application on the first device by using the user account.

Based on the same idea, an embodiment of this specification further provides an apparatus corresponding to the above-mentioned method. FIG. 10 is a schematic structural diagram of a trusted device setting apparatus corresponding to FIG. 6 according to an embodiment of this specification. As shown in FIG. 10, the apparatus can include: a setting page obtaining module 1002, configured to obtain a trusted device setting page that is sent by a server and that includes device information of a historical login device, where the historical login device is a device on which a user account is used to log in to a target application; a setting page display module 1004, configured to display the trusted device setting page, where the trusted device setting page includes a first confirmation control; a confirmation operation obtaining module 1006, configured to obtain a first confirmation operation performed by a user on the first confirmation control; a setting request generation module 1008, configured to generate a trusted device setting request based on the first confirmation operation, where the trusted device setting request includes a device identifier of a device that is in the historical login device and that is determined by the user to be set as a trusted device; and a setting request sending module 1010, configured to send the trusted device setting request to the server, so that the server generates a login credential corresponding to the trusted device, where the login credential is a login credential used to log in to the target application by using the user account.

Based on the same idea, an embodiment of this specification further provides a device corresponding to the above-mentioned method.

FIG. 11 is a schematic structural diagram of a login procedure triggering device corresponding to FIG. 2 or FIG. 4 or a trusted device setting device corresponding to FIG. 6 according to an embodiment of this specification. As shown in FIG. 11, a device 1100 can include at least one processor 1110; and a storage 1130 communicatively connected to the at least one processor. Corresponding to the login procedure triggering method shown in FIG. 2, the storage 1130 stores instructions 1120 that can be executed by the at least one processor 1110, and the instructions are executed by the at least one processor 1110, so that the at least one processor 1110 can perform the following operations: obtaining a login request that is sent by a first device and that is used to log in to a target application, where the login request includes a first login credential and a first device identifier of the first device; determining a second login credential corresponding to the first device identifier, where the second login credential is a credential that is generated after the first device establishes a trust relationship with a user account of the target application and that is used by the first device to log in to the user account; determining whether the first login credential is consistent with the second login credential, to obtain a first determining result; and if the first determining result indicates that the first login credential is consistent with the second login credential, triggering a procedure of logging in to the target application on the first device by using the user account.

Corresponding to the login procedure triggering method shown in FIG. 4, the storage 1130 stores instructions 1120 that can be executed by the at least one processor 1110, and the instructions are executed by the at least one processor 1110, so that the at least one processor 1110 can perform the following operations: obtaining a first operation of starting a target application by a user; displaying a login page based on the first operation, where the login page includes account information of a user account and a login operation control used to indicate that the first device serves as a trusted device and logs in to the target application by using the user account; obtaining a second operation performed by the user on the login operation control; generating, based on the second operation, a login request used to request to log in to the target application by using the user account, where the login request includes the first login credential and a first device identifier of the first device; and sending the login request to a server, so that after verification of the first login credential succeeds, the server triggers a procedure of logging in to the target application on the first device by using the user account.

Corresponding to the trusted device setting method shown in FIG. 6, the storage 1130 stores instructions 1120 that can be executed by the at least one processor 1110, and the instructions are executed by the at least one processor 1110, so that the at least one processor 1110 can perform the following operations: obtaining, by a second device, a trusted device setting page that is sent by a server and that includes device information of a historical login device, where the historical login device is a device on which a user account is used to log in to a target application; displaying the trusted device setting page, where the trusted device setting page includes a first confirmation control; obtaining a first confirmation operation performed by a user on the first confirmation control; generating a trusted device setting request based on the first confirmation operation, where the trusted device setting request includes a device identifier of a device that is in the historical login device and that is determined by the user to be set as a trusted device; and sending the trusted device setting request to the server, so that the server generates a login credential corresponding to the trusted device, where the login credential is a credential used to log in to the target application by using the user account.

Based on the same idea, an embodiment of this specification further provides a computer-readable medium corresponding to the above-mentioned method. The computer-readable medium stores computer-readable instructions, and the computer-readable instructions can be executed by a processor, to implement the login procedure triggering method or the trusted device setting method.

The embodiments of this specification are described in a progressive way. For same or similar parts of the embodiments, mutual references can be made to the embodiments. Each embodiment focuses on a difference from other embodiments. Particularly, the device shown in FIG. 11 is basically similar to the method embodiment, and therefore is briefly described. For related parts, references can be made to some descriptions in the method embodiments.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements in many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and manufacture an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using some described hardware description languages and is programmed into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. The storage controller can also be implemented as a part of the control logic of the storage. A person skilled in the art also knows that, in addition to implementing the controller by using only the computer-readable program code, logic programming can be performed on method steps to enable the controller to implement the same function in forms of the logic gate, the switch, the application-specific integrated circuit, the programmable logic controller, the embedded microcontroller, etc. Therefore, the controller can be considered as a hardware component, and an apparatus included in the controller for implementing various functions can also be considered as a structure in the hardware component. Alternatively, the apparatus configured to implement various functions can even be considered as both a software module implementing the method and a structure in the hardware component.

The system, apparatus, module, or unit illustrated in the above-mentioned embodiments can be specifically implemented by using a computer chip or an entity, or can be implemented by using a product having a specific function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatuses are described by dividing the apparatus into various units based on functions. Certainly, when this specification is implemented, functions of the units can be implemented in one or more pieces of software and/or hardware.

A person skilled in the art should understand that the embodiments of this specification can be provided as methods, systems, or computer program products. Therefore, this specification can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This application is described with reference to the flowcharts and/or block diagrams of the method, the device (system), and the computer program product based on the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

These computer program instructions can be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more processes in the flowcharts and/or in one or more blocks in the block diagrams.

The computer program instructions can alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory. The memory may include a non-persistent memory, a random access memory (RAM), a non-volatile memory, and/or another form in a computer-readable medium, for example, a read-only memory (ROM) or a flash memory (flash RAM). The memory is an example of the computer-readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by the computing device. Based on the definition in this specification, the computer readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product or device that includes the element.

A person skilled in the art should understand that the embodiments of this specification can be provided as methods, systems, or computer program products. Therefore, this specification can use a form of hardware only embodiments, software only embodiments, or embodiments with a combination of software and hardware. A form of a computer program product that is implemented on one or more computer-usable storage media (including but not limited to a disk memory, a CD-ROM, an optical memory, etc.) that include computer-usable program code can be used in this specification.

This specification can be described in the general context of computer-executable instructions, for example, a program module. Usually, the program module includes a routine, a program, an object, a component, a data structure, etc. executing a specific task or implementing a specific abstract data type. This specification can alternatively be practiced in distributed computing environments. In the distributed computing environments, tasks are executed by remote processing devices connected through a communication network. In the distributed computing environments, the program module can be located in a local and remote computer storage medium including a storage device.

The above-mentioned descriptions are merely embodiments of this specification, and are not intended to limit this specification. A person skilled in the art can make various modifications and changes to this specification. Any modification, equivalent replacement, or improvement made without departing from the spirit and principle of this specification shall fall within the scope of the claims in this specification.

## Claims

1. A login procedure triggering method, comprising:
obtaining a login request that is sent by a first device and that is used to log in to a target application, wherein the login request comprises a first login credential and a first device identifier of the first device;
determining a second login credential corresponding to the first device identifier, wherein the second login credential is a credential that is generated after the first device establishes a trust relationship with a user account of the target application and that is used by the first device to log in to the user account;
determining whether the first login credential is consistent with the second login credential, to obtain a first determining result; and
if the first determining result indicates that the first login credential is consistent with the second login credential, triggering a procedure of logging in to the target application on the first device by using the user account.

2. The method according to claim 1, wherein before the triggering a procedure of logging in to the target application on the first device by using the user account, the method further comprises:
determining whether the first login credential is within a validity period of the first login credential, to obtain a second determining result; and
the triggering a procedure of logging in to the target application on the first device by using the user account specifically comprises:
if the second determining result indicates that the first login credential is within the validity period of the first login credential, triggering the procedure of logging in to the target application on the first device by using the user account.

3. The method according to claim 1, wherein before the determining a second login credential corresponding to the first device identifier, the method further comprises:
parsing the first login credential, to obtain a second device identifier comprised in the first login credential; and
determining whether the second device identifier is consistent with the first device identifier, to obtain a third determining result; and
the determining a second login credential corresponding to the first device identifier specifically comprises:
if the third determining result indicates that the second device identifier is consistent with the first device identifier, searching for the second login credential corresponding to the first device identifier.

4. The method according to claim 1, wherein before the obtaining a login request that is sent by a first device and that is used to log in to a target application, the method further comprises:
obtaining device information of a historical login device on which the user account is used to log in to the target application, wherein the historical login device comprises the first device;
generating a trusted device setting page that comprises the device information of the historical login device, wherein the device information comprises at least one of a device model or a user-defined device name;
sending the trusted device setting page to a second device, wherein the second device is a device that is in a login state of logging in to the target application by using the user account before the first device sends the login request;
obtaining a trusted device setting request sent by the second device on the trusted device setting page, wherein the trusted device setting request comprises the first device identifier of the first device; and
determining the first device as a trusted device based on the first device identifier of the first device, wherein the trusted device is used to represent a device that has permission to log in to the user account in the target application by using a login credential.

5. The method according to claim 4, wherein after the determining the first device as a trusted device, the method further comprises:
generating the second login credential corresponding to the first device based on the first device identifier of the first device;
sending the second login credential to the first device; and
storing a correspondence between the second login credential and the first device.

6. The method according to claim 4, wherein before the determining the first device as a trusted device, the method further comprises:
obtaining first to-be-verified information sent by the second device; and
determining whether the first to-be-verified information is consistent with first preset verification information, to obtain a fourth determining result, wherein the first preset verification information comprises at least one of registration verification information or identity authentication information, the registration verification information is verification information provided when a user registers with the target application by using the user account, and the identity authentication information is identity information provided in a process in which the user performs user authentication based on the user account; and
the determining the first device as a trusted device specifically comprises:
determining the first device as the trusted device if the fourth determining result indicates that the first to-be-verified information is consistent with the first preset verification information.

7. The method according to claim 5, wherein before the sending the second login credential to the first device, the method further comprises:
obtaining a login verification request sent by the first device, wherein the login verification request comprises account information of the user account and second to-be-verified information provided by a user on the first device;
determining whether the second to-be-verified information is consistent with second preset verification information, to obtain a fifth determining result, wherein the second preset verification information comprises at least one of registration verification information or identity authentication information, the registration verification information is verification information provided when the user registers with the target application by using the user account, and the identity authentication information is identity information provided in a process in which the user performs user authentication based on the user account; and
if the fifth determining result indicates that the second to-be-verified information is consistent with the second preset verification information, allowing the first device to log in to the target application by using the user account; and
the sending the second login credential to the first device specifically comprises:
sending the second login credential to the first device when the first device is in a login state of logging in to the target application by using the target account.

8. The method according to claim 4, wherein the trusted device setting page further comprises device information of the second device, and the method further comprises:
determining the second device as the trusted device.

9. The method according to claim 8, wherein after the determining the second device as the trusted device, the method further comprises:
generating a third login credential corresponding to the second device based on a device identifier of the second device;
sending the third login credential to the second device; and
storing a correspondence between the third login credential and the second device.

10. The method according to claim 1, wherein the method further comprises:
deleting a correspondence between the second login credential and the first device after the procedure of logging in to the target application on the first device by using the user account is triggered.

11. The method according to claim 10, wherein the method further comprises:
generating a fourth login credential based on the first device identifier of the first device;
storing a correspondence between the fourth login credential and the first device; and
sending the fourth login credential to the first device.

12. The method according to claim 1, wherein after the triggering a procedure of logging in to the target application on the first device by using the user account, the method further comprises:
canceling a login state of the user account on another device.

13. The method according to claim 1, wherein the method further comprises:
determining whether the user account is used to log in to a plurality of devices within a preset time period, to obtain a fifth determining result; and
if the fifth determining result indicates that the user account is used to log in to the plurality of devices within the preset time period, sending, to at least one of the plurality of devices, reminder information used to prompt a user to set a trusted device, wherein the trusted device is used to represent a device that has permission to log in to the user account in the target application by using a login credential.

14. A login procedure triggering method, comprising:
obtaining, by a first device, a first operation of starting a target application by a user;
displaying a login page based on the first operation, wherein the login page comprises account information of a user account and a login operation control used to indicate that the first device serves as a trusted device and logs in to the target application by using the user account;
obtaining a second operation performed by the user on the login operation control;
generating, based on the second operation, a login request used to request to log in to the target application by using the user account, wherein the login request comprises a first login credential and a first device identifier of the first device; and
sending the login request to a server, so that after verification of the first login credential succeeds, the server triggers a procedure of logging in to the target application on the first device by using the user account.

15. A trusted device setting method, comprising:
obtaining, by a second device, a trusted device setting page that is sent by a server and that comprises device information of a historical login device, wherein the historical login device is a device on which a user account is used to log in to a target application;
displaying the trusted device setting page, wherein the trusted device setting page comprises a first confirmation control;
obtaining a first confirmation operation performed by a user on the first confirmation control;
generating a trusted device setting request based on the first confirmation operation, wherein the trusted device setting request comprises a device identifier of a device that is in the historical login device and that is determined by the user to be set as a trusted device; and
sending the trusted device setting request to the server, so that the server generates a login credential corresponding to the trusted device, wherein the login credential is a credential used to log in to the target application by using the user account.

16. A login procedure triggering apparatus, comprising:
an information obtaining module, configured to obtain a login request that is sent by a first device and that is used to log in to a target application, wherein the login request comprises a first login credential and a first device identifier of the first device;
a credential determining module, configured to determine a second login credential corresponding to the first device identifier, wherein the second login credential is a credential that is generated after the first device establishes a trust relationship with a user account of the target application and that is used by the first device to log in to the user account;
a determining module, configured to determine whether the first login credential is consistent with the second login credential, to obtain a first determining result; and
a login procedure triggering module, configured to: if the first determining result indicates that the first login credential is consistent with the second login credential, trigger a procedure of logging in to the target application on the first device by using the user account.

17. A login procedure triggering apparatus, comprising:
a first operation obtaining module, configured to obtain a first operation of starting a target application by a user;
a page display module, configured to display a login page based on the first operation, wherein the login page comprises account information of a user account and a login operation control used to indicate that the first device serves as a trusted device and logs in to the target application by using the user account;
a second operation obtaining module, configured to obtain a second operation performed by the user on the login operation control;
a request generation module, configured to generate, based on the second operation, a login request used to request to log in to the target application by using the user account, wherein the login request comprises a first login credential and a first device identifier of the first device; and
a request sending module, configured to send the login request to a server, so that after verification of the first login credential succeeds, the server triggers a procedure of logging in to the target application on the first device by using the user account.

18. A trusted device setting apparatus, comprising:
a setting page obtaining module, configured to obtain a trusted device setting page that is sent by a server and that comprises device information of a historical login device, wherein the historical login device is a device on which a user account is used to log in to a target application;
a setting page display module, configured to display the trusted device setting page, wherein the trusted device setting page comprises a first confirmation control;
a confirmation operation obtaining module, configured to obtain a first confirmation operation performed by a user on the first confirmation control;
a setting request generation module, configured to generate a trusted device setting request based on the first confirmation operation, wherein the trusted device setting request comprises a device identifier of a device that is in the historical login device and that is determined by the user to be set as a trusted device; and
a setting request sending module, configured to send the trusted device setting request to the server, so that the server generates a login credential corresponding to the trusted device, wherein the login credential is a login credential used to log in to the target application by using the user account.

19. A login procedure triggering device, comprising:
at least one processor; and
a storage communicatively connected to the at least one processor, wherein
the storage stores instructions that can be executed by the at least one processor, and the instructions are executed by the at least one processor, to enable the at least one processor to perform the following operations:
obtaining a login request that is sent by a first device and that is used to log in to a target application, wherein the login request comprises a first login credential and a first device identifier of the first device;
determining a second login credential corresponding to the first device identifier, wherein the second login credential is a credential that is generated after the first device establishes a trust relationship with a user account of the target application and that is used by the first device to log in to the user account;
determining whether the first login credential is consistent with the second login credential, to obtain a first determining result; and
if the first determining result indicates that the first login credential is consistent with the second login credential, triggering a procedure of logging in to the target application on the first device by using the user account.

20. A login procedure triggering device, comprising:
at least one processor; and
a storage communicatively connected to the at least one processor, wherein
the storage stores instructions that can be executed by the at least one processor, and the instructions are executed by the at least one processor, to enable the at least one processor to perform the following operations:
obtaining a first operation of starting a target application by a user;
displaying a login page based on the first operation, wherein the login page comprises account information of a user account and a login operation control used to indicate that the first device serves as a trusted device and logs in to the target application by using the user account;
obtaining a second operation performed by the user on the login operation control;
generating, based on the second operation, a login request used to request to log in to the target application by using the user account, wherein the login request comprises a first login credential and a first device identifier of the first device; and
sending the login request to a server, so that after verification of the first login credential succeeds, the server triggers a procedure of logging in to the target application on the first device by using the user account.

21. A trusted device setting device, comprising:
at least one processor; and
a storage communicatively connected to the at least one processor, wherein
the storage stores instructions that can be executed by the at least one processor, and the instructions are executed by the at least one processor, to enable the at least one processor to perform the following operations:
obtaining a trusted device setting page that is sent by a server and that comprises device information of a historical login device, wherein the historical login device is a device on which a user account is used to log in to a target application;
displaying the trusted device setting page, wherein the trusted device setting page comprises a first confirmation control;
obtaining a first confirmation operation performed by a user on the first confirmation control;
generating a trusted device setting request based on the first confirmation operation, wherein the trusted device setting request comprises a device identifier of a device that is in the historical login device and that is determined by the user to be set as a trusted device; and
sending the trusted device setting request to the server, so that the server generates a login credential corresponding to the trusted device, wherein the login credential is a login credential used to log in to the target application by using the user account.

22. A computer-readable medium, wherein the computer-readable medium stores computer-readable instructions, and the computer-readable instructions can be executed by a processor to implement the login procedure triggering method according to any one of claims 1 to 13, the login procedure triggering method according to claim 14, or the trusted device setting method according to claim 15.
